# EUROPÄISCHE PATENTSCHRIFT

(11) **EP 3 174 687 B1**
(45) Veröffentlichungstag und Bekanntmachung des Hinweises auf die Patenterteilung: **14.03.2018**
(21) Anmeldenummer: 15741120.8
(22) Anmeldetag: 16.07.2015
(51) Int. Cl.: B29C 55/20

(54) **KLUPPE MIT KNIEHEBEL-ANORDNUNG**
GRIPPER WITH TOGGLE LEVER ARRANGEMENT
PINCE MUNI D'UN ENSEMBLE DE LEVIER À GENOUILLÈRE

(30) Priorität: 31.07.2014 DE 102014011513
(43) Veröffentlichungstag der Anmeldung: 07.06.2017
(73) Patentinhaber: Brückner Maschinenbau GmbH & Co. KG, 83313 Siegsdorf (DE)
(72) Erfinder: GUMPINGER, Helmut, 83454 Anger (DE)
(74) Vertreter: Flach, Dieter Rolf Paul
(86) Internationale Anmeldenummer: PCT/EP2015/001466
(87) Internationale Veröffentlichungsnummer: WO 2016/015836

(56) Entgegenhaltungen:
- US-A- 3 104 444
- US-A- 3 175 245
- US-A- 5 970 589

## Beschreibung

Die Erfindung betrifft eine Kluppe mit einer Kniehebel-Anordnung für eine Transportanlage, insbesondere eine Reckanlage in Form einer sequentiellen Reckanlage oder einer Simultan-Reckanlage, insbesondere nach dem Oberbegriff des Anspruches 1.

Reckanlagen finden insbesondere bei der Kunststofffolienherstellung Anwendung. Bekannt sind sogenannte Simultan-Reckanlagen, in welchen ein Kunststofffilm gleichzeitig in Quer- und Längsrichtung gereckt werden kann. Bekannt sind ebenso sequentielle Reckanlagen, bei denen ein Kunststofffilm in zwei aufeinander folgenden Stufen gereckt wird, beispielsweise zunächst in Längsrichtung und dann in Querrichtung (oder umgekehrt).

Die zu reckende Materialbahn, in der Regel also ein Kunststofffilm, wird mittels einer Klemmvorrichtung, sog. Kluppen erfasst, die auf beiden Seiten der zu reckenden Materialbahn auf umlaufenden Führungsschienen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer gewissen Relaxation und/oder Wärmenachbehandlung unterzogen werden kann.

Die eingangs erwähnten sequentiellen und simultanen Transportsysteme umfassen üblicherweise zwei symmetrisch zu einer vertikalen Symmetrieebene angeordnete, umlaufende Führungsbahnen, wobei jede Führungsbahn eine teilweise oder ganz umlaufende Führungsschiene umfasst, längs derer die Transportelemente auf der Führungsbahn verfahren bzw. bewegt werden. Diese Transporteinheiten umfassen üblicherweise Kluppeneinheiten und Antriebseinheiten, die teilweise auch als Transportteile bezeichnet werden. Die Führung und Kraftaufnahme der Transportteile auf der Führungsschiene kann dabei über Gleitelemente, über Rollenelemente oder über eine Kombination aus Gleit- und Rollenelementen erfolgen.

Kluppen werden in der Technik zum Längsbewegen von Materialbahnen, insbesondere Folienbahnen, benötigt. Beispielsweise in einer Vorrichtung zum Strecken von Kunststoff-Folienbahnen ist zur Transportrichtung symmetrisch links und rechts jeweils eine geschlossene Führungseinrichtung vorgesehen, an der umlaufend miteinander verbundene Kluppenkettenglieder oder Kluppenwagen vorgesehen sind, auf denen die Kluppen am Beginn der Vorrichtung die Material- oder Folienbahn ergreifen und bis zum Ende der Vorrichtung fortbewegen. Ebenso sind entsprechende Maschinen bekannt, bei denen die Kluppenwagen nicht mechanisch miteinander verbunden sind, sondern durch Linearmotorantriebe unabhängig entlang der endlosen Schienenführung bewegbar sind. Derartige Transportsysteme sind insbesondere für Reckanlagen gebräuchlich, bei denen Kunststofffolien simultan in zwei Achsen verstreckt werden. Entsprechende Kluppenwagen sind zum Beispiel in DE-A-44 36 676 oder in DE-A-195 10 141 offenbart.

Die verschiedenen Reckanlagentypen sollen nachfolgend kurz beschrieben werden. Bei allen vorbekannten Reckanlagen werden unterschiedlich gestaltete Klemmvorrichtungen für die Material- oder Warenbahn im Allgemeinen und für eine zu reckende Kunststofffolienbahn im Besonderen verwendet und eingesetzt.

### A) Simultane Reckanlagen mit Linearmotoren:

Bei Simultan-Reckanlagen erfolgt die Bewegung der Transporteinheiten auf Basis von Linearmotoren. Ein derartiges, linearmotorgetriebenes Transportsystem ist beispielsweise aus der WO 89/12543 A1 oder aus der DE 44 41 020 C1 als bekannt zu entnehmen.

Diese linearmotorgetriebenen Transportsysteme und insbesondere Reck- und Simultan-Reckanlagen sind in der Regel so aufgebaut, dass das Kluppenteil über eine Brücke mit der eigentlichen Antriebs- bzw. Transporteinheit verbunden ist. Die Einleitung der Antriebskräfte erfolgt über beispielsweise angeflanschte Sekundärteile, beispielsweise in Form sogenannter Permanentmagnete (unter Verwendung eines zugehörigen Magnetkäfigs), die an den sogenannten Antriebs- bzw. Transporteinheiten mit diesen mitverfahrbar angebracht sind. Dabei können zwischen den über einen Linearmotorantrieb angetriebenen Transporteinheiten auch leerlaufende Transporteinheiten vorgesehen sein, sog. "Idler", die mit keinem derartigen Sekundärteil unter Verwendung von Permanentmagneten ausgestattet sind. Ansonsten sind allerdings diese nicht angetriebenen Transporteinheiten konstruktiv entsprechend den angetriebenen Transporteinheiten ausgestaltet und werden ebenso über die zu reckende Materialbahn, in der Regel über den die zu reckenden Kunststofffolienfilm eingeleiteten Filmkräfte mitbewegt, da die entsprechenden Kluppen den Filmrand während des Durchlaufs in Abzugsrichtung der Folienbahn erfassen. Die über den Linearmotor angetriebenen Transporteinheiten bewegen über die Kluppeneinheiten damit den zu reckenden Kunststofffilm durch die Folienanlage, wobei die dazwischen sitzenden, nicht angetriebenen Transporteinheiten dann über den die Anlage hindurch bewegten Kunststofffilm mitbewegt werden.

### B) Mechanische Simultananlagen

Eine mechanische Reckanlage ist beispielsweise aus der DE 37 41 582 A1, der WO 2004/71748 oder der US 5,970,589 als bekannt zu entnehmen. Auch bei diesem Ausführungsbeispiel stützen sich die Kluppen-Transporteinheiten über auf horizontalen wie vertikalen Achsen drehenden Rollen an der Ober- wie der Unterseite wie auch an den beiden in Horizontalrichtung versetzt zueinander liegenden Vertikalseiten einer Führungs- und Gewichtsaufnahmeschiene ab. Daneben besteht noch eine weitere Steuerschiene, worüber über Kettenscherenglieder der Abstand der Kluppen zueinander im Bereich der divergierenden Simultanreckzonen in der Maschinenrichtung (MD) unterschiedlich eingestellt werden kann.

### C) Mechanische Kettenreckanlage

Eine vorbekannte Querreckanlage oder Querreckstufe innerhalb einer Reckanlage ist beispielsweise aus der US 5,797,172 A, der EP 471 052, oder der WO 2014/94803 bekannt geworden. Gemäß dieser Vorveröffentlichung wird eine zu reckende Materialbahn, in der Regel also ein Kunststofffilm, mittels Kluppen erfasst, die an Ketten befestigt sind, und die auf beiden Seiten der zu reckenden Materialbahn auf umlaufendenden Führungsbahnen verfahrbar angeordnet sind. Die Kluppen werden dabei nacheinander von einer Einlaufzone (in welcher der Rand beispielsweise einer zu reckenden Kunststofffolie erfasst wird) über eine Reckzone (in der die gegenüberliegenden Kluppen auf den Führungsschienenabschnitten mit einer Querkomponente divergierend zur Transportrichtung voneinander wegbewegt werden) zu einer Auslaufzone und dann auf einem Rückweg wieder zur Einlaufzone verfahren, wobei die Folie in der Auslaufzone beispielsweise einer abschließenden Relaxation und/oder Wärmenachbehandlung unterzogen werden kann.

### D) Die bei den verschiedenen Reckanlagen verwendeten Klemmvorrichtung:

Prinzipiell ist allen erläuterten Ausführungsformen gemein, dass die Waren- oder Materialbahn oder im Besonderen die Folienbahn in einer Klemmvorrichtung (KluppenEinrichtung) eingeklemmt wird und mit einem damit verbundenen Transportteil, z. B. einer Kette, einem Scherengitter oder einem Linearmotor, durch die verschiedenen Verfahrenszonen einer Transportanlage im Allgemeinen oder einer Reckanlage im Besonderen geführt wird.

Dabei werden in der Klemmvorrichtung die entsprechenden Kluppenhebel, auch Messerklappe genannt, durch geeignete Betätigungsglieder einmal in ihre Verschlussstellung, in der sie die Material- oder Folienbahn zwischen ihrem Klemmstück und dem Kluppentisch eingeklemmt halten, und am Ende der Vorrichtung wieder in ihre Öffnungsstellung verschwenkt, in der sie die Material- oder Folienbahn wieder freigeben. Die Kluppen sind dabei nach dem Stand der Technik mit einem Achsbolzen versehen, der in einer entsprechenden, am Kluppenkörper ausgebildeten Achslagerung gelagert ist. Eine derartige Kluppe ist z.B. aus der Offenlegungsschrift DE 17 10 745, der US 3 104 444, der DE 100 17 347 oder der DE 195 19 095 A1, die der EP 0 782 499 B1 entspricht, bekannt.

Bei bestimmten Folientypen mit hoher Rissneigung und/ oder hohen eingeleiteten Reckkräften ist es notwendig, die Klemmvorrichtung speziell in einer sog. Kniehebelausführung zu konstruieren.

Insbesondere bei Folienreckanlagen, die nach dem Simultanprinzip arbeiten, also die Vorfolie (Cast Film) gleichzeitig in zwei im Wesentlichen orthogonalen Achsen verstrecken, können die Ränder je nach Prozessvoraussetzungen, starken Kräften ausgesetzt sein. Dies ist darin begründet, dass die Kluppenabstände bei diesem Verfahren mit dem Längsreckverhältnis zunehmen und somit die Zugkräfte der Folie im Wesentlichen über den Rand eingeleitet werden.

Wird hier z.B. der Kluppenhebel in einem falschen Winkel aufgesetzt, dann kann es dazu führen, dass der Film unter dem Kluppenhebel herausgereckt wird oder der Film so geschädigt wird, dass er reißt.

Die bekannten Konstruktionen sind nur für relativ begrenzte Bereiche von Folienranddicken geeignet. Dies ergibt sich teilweise auch aus der Notwendigkeit, dass die Kluppenhebelanordnungen möglichst wenig Bauraum beanspruchen sollen bzw. können, da die Kluppenwagen in Folienreckanlagen durch Behandlungsöfen bewegt werden. Je nach Randdicke verschiebt sich dann die Einklemmstelle zwischen Kluppenhebel und Kluppentisch. Bei extrem dünnen Materialbahnen oder Folien würde der Haltepunkt in Richtung Folienbahnmitte wandern, während sich bei sehr dicken Folienbahnrändern der Klemmpunkt von der Bahnmitte wegverlagern würde. Dies hätte aus verschiedenen Gründen Nachteile.

Durch die hohen Ausstoßleistungen moderner Folienreckanlagen wird auch immer mehr Wert auf die Flexibilität solcher Maschinen gestellt, damit die Maschinen permanent unter Vollausstoß ausgelastet sind. Nur durch eine vielfältige Produktpalette und mit minimalem Aufwand für die Folienlager ist ein wirtschaftlicher Betrieb solcher Anlagen möglich. Daher sollte möglichst ohne Umrüstzeiten ein Wechsel auf ein anderes Folienproduktes erreichbar sein. Das heißt aber auch, dass unterschiedliche Foliendicken auf ein und derselben Folienreckanlage hergestellt werden sollen, ohne Veränderungen an den Kluppen vornehmen zu müssen.

Darüber hinaus können bei bestimmten Folien die Ränder dazu neigen, sich parallel zur Laufrichtung der Folie teilweise einzurollen. In diesem Fall versagen die herkömmlichen Kluppen, weil deren Greifbereich nicht die doppelte Randdicke abdecken kann. Dies führt dazu, dass z.B. bei Folienreckanlagen die Folie von den Kluppen nicht gehalten wird und somit die gesamte Produktion zum Stillstand kommt.

In der DE 17 10 745 wird vorgeschlagen, die Kontur der Klemmfläche zu optimieren. Diese bekannte Konstruktion weist jedoch den Nachteil auf, dass die Klemmfläche bei dünnen Folien weit über den Kluppentisch in Richtung Bahnmitte hinausragt. Die DE 100 17 347 schlägt ein Koppelgetriebe insbesondere für aufgewölbte Ränder vor.

Kniehebel-Klemmvorrichtungen sind zudem beispielsweise auch bei linearmotorgetriebenen oder anderen Reckanlagen als bekannt zu entnehmen, z.B. aus der DE 10 2013 011 965, der DE 195 10 141 C1 oder der US 3 175 245 A.

Bei der EP 2 188 B1 und der WO 2009 30 195 A1 (entspricht der EP 2 188 111 B1) werden Magnete zur Unterstützung der Öffnung des Kluppenhebels eingesetzt.

Eine vorbekannte Klemmvorrichtung mit einer Kniehebel-Konstruktion ist auch aus der US 5,970,589 A als bekannt zu entnehmen.

Diese Vorveröffentlichung zeigt beispielsweise eine Klemmvorrichtung mit einem sog. Kluppenteil, welches mit einem Transportteil, hier mit einem sog. Scherengitter (Pentagraph) verbunden ist und durch die Reckanlage bewegt wird.

Die aus dieser Vorveröffentlichung bekannte Kluppe besteht aus einer Halterung, in der über einen Achsbolzen ein Kluppenhebel, eine sog. Messerklappe befestigt ist. Die Messerklappe wird über ein Öffner-Schließerteil und eine nicht dargestellte Öffner-Schließereinheit am Einlauf- bzw. Auslauf geschlossen bzw. geöffnet und klemmt die Material- oder Warenbahn, im Besonderen einen Kunststofffolienfilm zwischen der Greiffläche an der Kluppe und einem Kluppentisch ein oder gibt die Materialbahn oder den Kunststofffolienfilm frei. Der Kluppenhebel ist bei dieser Vorveröffentlichung als Kniehebel ausgebildet und umfasst eine Klappe mit einer Gleitfläche. Durch konstruktive Aussparungen ist der Kniehebel über eine Kniehebelachse mit der Messerklappe verbunden. Besondere Bedeutung hat bei dieser Ausbildungsform eine vorgesehene Positionsfeder, die dafür sorgt, dass die Greiffläche des Kluppenhebels beim Schließen der Kluppe immer in der gleichen relativen Position auf die Warenbahn oder den Kunststofffilm trifft.

Der Stand der Technik umfasst also Kluppen mit einem Kniehebel oder einem Stempelfuß, wobei die Kluppenhebeli ihr Eigengewicht (WO 2008/ 40 480, JP 2003 23 69 27), durch eine angebrachte Feder (US 5 970 589, JP 2006 19 88 17, JP 2005 26 26 80 oder durch ein Getriebe (DE 100 17 347) in ihrer Position gehalten bzw. in Position gebracht werden.

Dadurch weisen alle vorstehend genannten Lösungen Nachteile auf.

Denn bei den Kluppenkonstruktionen, bei denen nur durch das Eigengewicht(beispielsweise durch exzentrische Lagerung) der Stempel im Stillstand gehalten wird, entsteht das Problem, dass im Falle einer vor allem schnell bewegten Kluppe mit einer in diesem Falle schnell bewegten Messerklappe (dynamisch) beachtliche Beschleunigungskräfte auftreten, die auf den Stempel einwirken und diesen in seiner gedachten Lage nicht stabil halten.

Im Falle einer Feder-Konstruktion wird mit dem Greifen der Folie die Gegenkraft immer größer, was zu einer Verminderung der Klemmkraft führt. Je größer die Bewegung, desto größer die Gegenkraft zur Verminderung der Klemm- bzw. Haltekraft.

Im Falle eines Getriebes wird der Stempelfuß in einer Zwangslage gehalten und so auf die Folie gedrückt. Da die Folie immer auch unter dem Stempelfuß herausgereckt wird, liegt der Stempel nicht mehr optimal auf der Folie, was zu Halteproblemen führt.

Zum Recken thermoplastischer Kunstharzfolien, insbesondere zum simultanen (gleichzeitigen biaxialen) Recken derartiger Folien werden verschiedene Formen der Greifflächen 25d, 25e ausgebildet, welche ein Herausrutschen der Folie beim Recken aus den Greifwerkzeugen verhindern sollen. Zum gleichen Zweck verwendet man Greifwerkzeuge, deren Greif- oder Druckflächen Einkerbungen aufweisen bzw. aufgerauht sind.

Bei der aufgerauhten Ausbildung der Druckflächen können Oberflächenschäden entstehen, welche in den Folienwerkstoff eingreifen und sie naturgemäß bei entsprechender Zugbeanspruchung beschädigen können.

Zum Recken dehnbarer Kunstharzfolien aus Polyester, Polypropylen, Polyvinylchlorid, Polyvinyldenchlorid, Polystyrol und dergl. sind derartige Greifwerkzeuge daher sehr gut geeignet.

Beim gleichzeitigen biaxialen Recken von Folien aus Sonderwerkstoffen oder z.B. aus Polyamid oder seinen Copolymerisaten sind Sonderlösungen der Klemmvorrichtungen notwendig, wie sie hier erfindungsgemäß ausgeführt werden.

Der Grund liegt vor allem darin, dass z.B. Polyamide eine festere Wasserstoffbindung besitzen als andere thermoplastische Harze, so dass zum Recken von Polyamidfolien auch eine wesentlich größere Zugkraft erforderlich ist als bei den anderen Folien.

Der "Griff" der Greifwerkzeuge muss also wesentlich "fester" sein als bei den anderen Folien, so dass die Polyamidfolien einreißen und dadurch der Reckprozess nicht optimal ablaufen kann.

Um diese hohe mechanische Festigkeit zu erreichen, bestehen die heute üblichen Greifwerkzeuge aus geeigneten Metallen, deren an sich niedriger Reibungskoeffizient an den Druck- oder Greifflächen dadurch erhöht wird, dass in der bereits erwähnten Weise diese Flächen mehr oder weniger stark aufgerauht werden, wobei sich jedoch die bereits aufgezeigten Nachteile ergeben. Der Einsatz von Greifwerkzeugen aus Metall ergibt außerdem den großen Nachteil, dass diese nur einen "partiellen Griff" ergeben. Mit diesem Ausdruck "partieller Griff" soll die Erscheinung bezeichnet werden, bei welcher beim gleichzeitigen und biaxialen Recken einer thermoplastischen Kunstharzfolie während des Reckvorganges die Stärke der Folie innerhalb der vom Greifer ergriffenen Fläche graduell abnimmt, so dass die Greif- oder Druckflächen der Greifer die Folie nicht mehr zwischen sich zusammenpressen und mit fortschreitendem Recken der Zwischenraum zwischen zwei Druckflächen von innen nach außen größer wird, so dass schließlich die Folie reißen oder einfach aus den Greifwerkzeugen herausrutschen kann. Das Reißen der Folie wird hierbei durch die zahnartige Ausbildung der Druckflächen noch begünstigt.

Angesichts der vielfachen Nachteile der bisher üblichen Greifwerkzeuge zum Recken thermoplastischer Kunstharzfolien, insbesondere zum gleichzeitigen biaxialen Recken von Polyamidfolien, hat die Erfindung sich daher die Aufgabe gesetzt, ein derartiges Greifwerkzeug zu schaffen, welches keinen dieser Nachteile aufweist und alle bei den verschiedenen Reckprozessen der verschiedenen Kunstharzfolien auftretenden Anforderungen voll und ganz erfüllt.

### Aufgabe der Erfindung

Aufgabe der Erfindung ist es, eine verbesserte Kluppe mit einer Kluppenhebel-Anordnung zu schaffen, die es ermöglicht, dass auch empfindliche Material- und Warenbahnen, insbesondere empfindliche Kunststofffilme während des Einklemmvorganges nicht oder nur geringst geschädigt werden.

Die Erfindung wird entsprechend den im Anspruch 1 angegebenen Merkmalen gelöst. Vorteilhafte Ausgestaltungen der Erfindung sind in den Unteransprüchen angegeben.

Durch die Erfindung wird mit vergleichsweise einfachen Mitteln eine deutliche Verbesserung gegenüber herkömmlichen Lösungen geschaffen.

Die Erfindung geht dabei von der Erkenntnis aus, dass sich die Haltekraft zwischen der Klemmvorrichtung und einer Material- oder Warenbahn im Allgemeinen und einem Kunststofffilm im Besonderen durch eine oder mehrere der nachfolgenden Möglichkeiten verbessern lässt:
- eine Verbesserung lässt sich dadurch erzielen, dass die Aufsetzposition des Kluppenhebels immer an der gleichen relativen Position der Materialbahn oder des Kunststofffilms ansetzt;
- eine Beschädigung der Materialbahn oder des Kunststofffilms in Richtung Materialbahn-Mitte soll im Rahmen der Erfindung vermieden werden, da die Materialbahn oder der Kunststofffilm auch aus dem Klemm- und Greifbereich heraus gestreckt wird und die hier auftretenden Beschädigungen (Kratzer, Eindrücke, Abdrücke, Aufwerfungen etc.) zu Rissen in der Materialbahn oder in dem Folienfilm führen können;
- ferner kann im Rahmen der Erfindung sichergestellt werden, dass der Verschleiß auf der Seite der hohen Reckspannung in der Materialbahn oder im Kunststofffilm vermieden wird, um konstante Haltebedingungen zu erreichen;
- ferner führt im Rahmen der Erfindung das Aufsetzen der Klemm- und Greifläche an der Unterseite des Kluppenhebels im Bereich der hinteren Seite, also der nach außen gerichteten Randseite der Materialbahn oder des Kunststofffilms zu geringen Reibkräften beim Schließen der Messerklappe; dadurch wird die Gefahr des Herausschiebens der Materialbahn insbesondere in Form des Kunststofffilms beim Einkluppen reduziert;
- ferner können im Rahmen der Erfindung konstant gleichbleibende Bedingungen zum Halten der Materialbahn und des Kunststofffilms geschaffen werden, nämlich auch dann,
   a) wenn ein vollständiger Kraftschluss nach dem Schließen der Kluppe erfolgt ist, und
   b) wenn die Druckflächen der Greiforgane in Form von Oberflächenbeschaffenheiten so ausgebildet sind, dass bei zunehmender Abnahme der Stärke der Materialbahn oder des Kunststofffilms beim Reckvorgang der dadurch zunehmende Abstand der Druckflächen von der Materialbahn ausgeglichen werden kann; dadurch ist sichergestellt, dass die Druckflächen also gewissermaßen der dünner werdenden Materialbahn oder des dünner werdenden Kunststofffilms "folgen" und die entsprechenden Abschnitte der Materialbahn so stets fest eingeklemmt halten.

Die Erfindung wird nachfolgend anhand von Zeichnungen näher erläutert. Dabei zeigen im Einzelnen:
- Figur 1a:: eine schematische Draufsicht auf eine Simultanreckanlage, bei der die Rücklaufseite gemeinsam mit der Vorlaufseite innerhalb eines Ofens verlaufend angeordnet ist;
- Figur 1b:: eine zu Figur 1a abgewandelte Ausführungsform, bei der die Rücklaufseite zur Prozessseite getrennt ist und außerhalb eines Ofens verläuft;
- Figur 2a:: eine schematische Querschnittsdarstellung durch ein Transportteil einer Kluppen-Transporteinheit, die längs einer Führungsschiene mittels Linearmotorantriebes verfahrbar ist;
- Figur 2b:: eine entsprechende Querschnittsdarstellung durch ein mit einem Transportteil gemäß Figur 2a fest verbundenen und darüber verfahrbaren Kluppenteil;
- Figur 3:: eine zu Figur 2b entsprechende Darstellung während des Schließvorganges des Kluppenhebels, wobei eine Zwischenposition gezeigt ist, bei der eine Kniehebelklappe an einem Kluppentisch lediglich in einem der Materialbahn abgewandt liegenden Bereich aufsetzt;
- Figur 3a:: eine vergrößerte Detaildarstellung der Zwischenposition gemäß Figur 3;
- Figur 4:: eine entsprechende Darstellung zu Figur 2b bzw. 3, jedoch nach Erreichen der endgültigen Schließ- und Klemmposition der Kluppe;
- Figur 5:: ebenfalls eine Darstellung des Kluppenhebels in Schließ- und Klemmposition, jedoch in einer zu Figur 4 um 90° verdrehten Ansicht parallel zur Ebene einer eingeklemmten Materialbahn;
- Figuren bis 6c: 6a: drei Darstellungen zur Verdeutlichung der erfindungsgemäßen Vorteile im Gegensatz zu einer nach dem Stand der Technik bekannten Lösung; und
- Figur 7:: ein zu den vorausgegangenen Darstellungen abgewandeltes Ausführungsbeispiel in einer Querschnittsdarstellung quer zu einer Führungsbahn.

Die nachfolgend erörterte Transport- und/oder Reckanlage ist anhand einer Simultan-Reckanlage erläutert. Der Aufbau der beanspruchten Klemmvorrichtung (Kluppe) gilt da-bei vom Grundsatz her für simultane, linearmotorgetriebene oder Pentagraph-Anlagen wie aber auch sequentielle Reckanlagen mit Kettenantrieben oder allgemein für Transportsysteme mit entsprechenden Kluppen und Kluppeneinrichtungen. Es kann sich dabei um Gleit- oder Rollensysteme handeln.

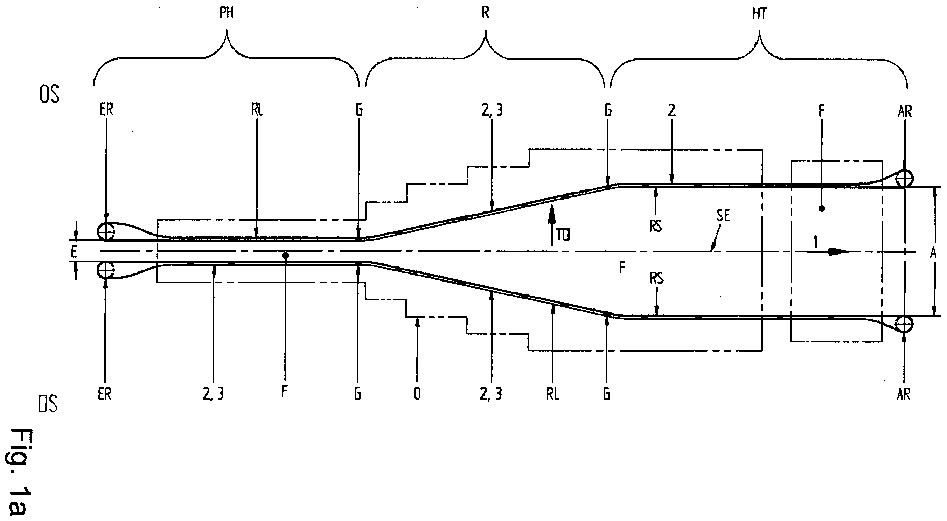

Eine derartige anhand von Figur 1a gezeigte Reckanlage weist zwei symmetrisch ausgebildete Antriebssysteme auf, die symmetrisch zu einer mittleren, vertikal zur Zeichenebene verlaufenden Symmetrie-Ebene SE liegen. In Figur 1a sind die beiden symmetrisch zur Symmetrieebene SE in Abzugsrichtung 1 angeordneten Antriebssysteme eingezeichnet, wobei zwischen den beiden auf geschlossenen Bahnen 2 umlaufenden Antriebssystemen die zu behandelnde, d.h. zu reckende Materialbahn insbesondere in Form eines Kunststofffolienfilms F längs der Abzugsrichtung 1 hindurch bewegt wird.

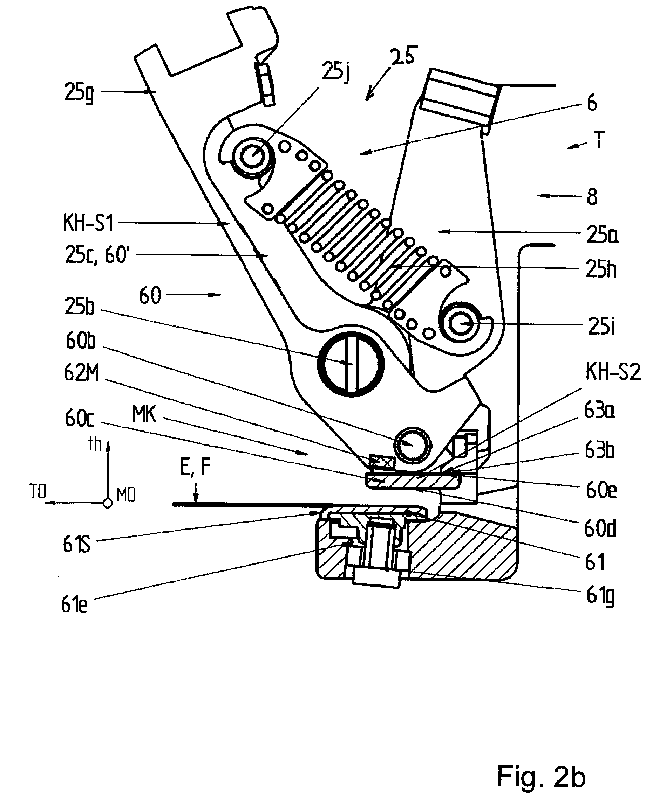

Eine unverstreckte Folie F (wobei im Folgenden von Folie gesprochen wird, obgleich mit einer derartigen Reckanlage allgemein eine Behandlungsbahn F entsprechend behandelt und simultan längs und quer gereckt werden kann, so dass die Erfindung insoweit nicht auf eine Kunststofffolienbahn beschränkt ist) läuft in einem Einlaufbereich ER in die Reckanlage ein und wird dort auf der Reck- oder Prozessseite RS von nachfolgend noch erörterten Kluppen 6, wie sie beispielsweise anhand von Figur 2b gezeigt sind, an beiden Rändern 8 ergriffen und eingeklemmt, und zwar auf der sogenannten Operator-Seite (OS operator side) sowie der antriebsseitigen Drive- Seite (DS drive side). Die Folie F wird dann in einer nachfolgenden Vorheizzone PH erwärmt und nachfolgend einer Reckzone R zugeführt, um hier simultan in Längs- und Querrichtung verstreckt zu werden. Anschließend durchläuft der verstreckte Film F verschiedene Wärmebehandlungszonen HT, bei denen auch eine Relaxation des Filmes erfolgen kann. Am Auslage AR der Reckanlage, d.h. am Ende der sogenannten Auslaufzone A, wird der Film durch geeignete Mittel ausgekluppt und verlässt dann die Simultan-Reckanlage.

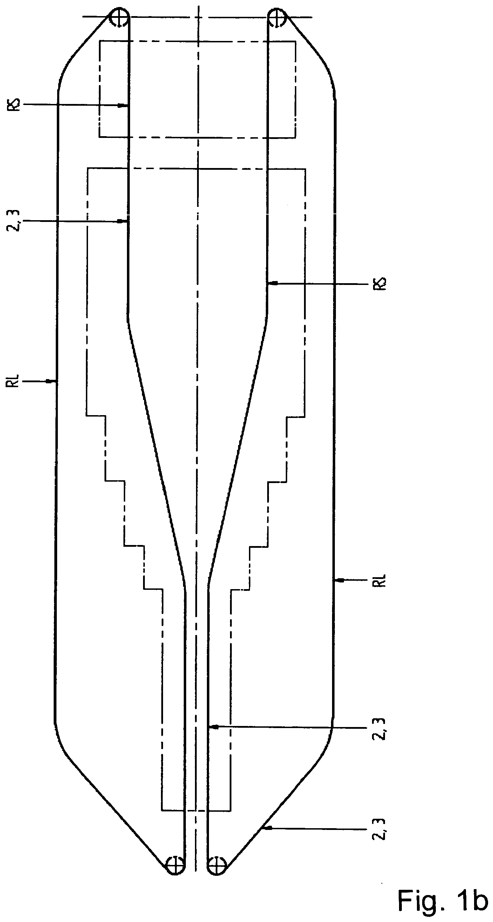

Ansonsten kann - wie auch anhand von Figur 1b gezeigt ist - die Führungsschiene im Vorlauf und damit im Reckbereich sowie im Rücklaufbereich abweichend verlaufen, nämlich derart, dass beispielsweise nur die Führungsschiene durch einen Ofen O verläuft und auf der Rücklaufseite RL außerhalb des Ofens zurückgeführt ist. Es wird insoweit auf bekannte Reckanlagen und zugehörige Aufbauten verwiesen.

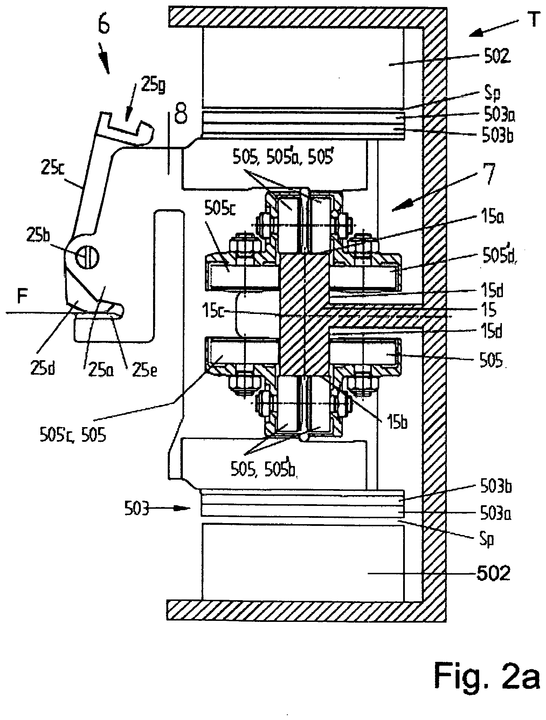

Der weitere Aufbau soll nachfolgend am Beispiel einer linearmotor-angetriebenen Kluppeneinrichtung erläutert werden, und zwar zunächst Bezug nehmend auf Figur 2a und 2b.

In Figur 2a ist in Querschnittsdarstellung quer zur Führungsschiene ein sog. Transportteil 7 gezeigt, welches über eine Brücke 8 mit dem in Figur 2b gezeigten Kluppenteil 6 zu einer Einheit fest verbunden ist. Die Kluppen-Transporteinheit T gliedert sich also in das Kluppenteil 6 und das sog. Transportteil 7, wobei das Kluppenteil 6 über das Transportteil 7 getragen und mit diesem mitverfahren wird.

Im gezeigten Ausführungsbeispiel ist dabei das Kluppenteil 6 mit dem Transportteil 7 über eine sog. Kluppen-Brücke 8 miteinander verbunden, die je nach Sichtweise zum Transport oder zum Kluppenteil hinzugerechnet werden kann. Unter diesem Brückenteil 8 befindet sich dann eine nach unten hin offene U-förmige Öffnung, wodurch das Kluppenteil 6 von dem eigentlichen Transportteil 7 leicht abgesetzt ist. Es sind aber auch beliebige andere Konstruktionen möglich.

Der eigentliche Aufbau der linearmotorgetriebenen Simultan-Reckanlage mit dem entsprechenden Linearmotorantrieb ist beispielsweise aus der EP 0 455 632 B1 oder der DE 44 36 676 C2 als bekannt zu entnehmen, auf deren Offenbarungsgehalt in vollem Umfang Bezug genommen wird. Die anhand von Figur 2a im Querschnitt gezeigte Darstellung gibt die Führungs- und Tragschiene 15 wieder, die aus horizontalen Laufflächen 15a, 15b, sowie zwei vertikal ausgerichteten Laufflächen, 15c, 15d besteht.

Im erläuterten Ausführungsbeispiel laufen auf jeder Lauffläche jeweils zumindest ein Paar von Laufrollen 505.

Anstelle der erwähnten Laufrollen oder Laufräder 505 können aber auch entsprechende Gleitelemente 505' vorgesehen sein, beispielsweise Gleitelemente 505'a, 505'b, 505'c und 505'd. Ebenso sind gemischte Ausführungsformen teilweise unter Verwendung von Laufrädern und teilweise unter Verwendung von Gleitelementen möglich.

Das entsprechende Transportteil wird über Linearmotoren angetrieben, die ortsfeste Primärteile 502 und mit den Kluppen-Transportteilen T mitbewegliche Sekundärteile 503 umfassen. Mit anderen Worten werden längs der Führungsschiene 15, die hier auch als Transportschiene 15 gleichzeitig dient (Monorail), die Kluppen, also die Kluppe 6, mit den Transportteilen 7 mittels der Primärteile 502 und der Sekundärteile 503 längs verfahren und bewegt.

Die erwähnten Primärteile 502 sind parallel zur Führungs- und Tragschiene 15 angebracht. Die Sekundärteile 503 bestehen aus den erwähnten Permanentmagneten 503a, die in einem jeweiligen Haltekäfig 503b befestigt sind, der wiederum an dem Kluppenkörper 6 gehalten ist.

Das mit dem vorstehend erläuterten Transportteil, dessen technische Details der EP 0 455 632 entnommen werden können, fest verbundene Kluppenteil 6 ist in der Querschnittsdarstellung gemäß Figur 2b gezeigt. Dabei ist in Figur 2b die Abzugsrichtung der Materialbahn oder des Kunststofffilms mit MD bezeichnet, also die Maschinenlängsrichtung, die senkrecht zur Zeichenebene verläuft. Ebenfalls eingezeichnet ist die Querrichtung TD der Transport- oder Reckanlage, also in die Richtung, die quer zur Materialbahn verläuft. Mit th ist letztlich eine Vektorrichtung senkrecht zur Materialbahnebene eingezeichnet, in welche die Dicke des in der Kluppe eingeklemmten Films oder der eingeklemmten Materialbahn ausgerichtet liegt.

Die folgende Beschreibung ist prinzipiell identisch zu allen auf dem Markt befindlichen Kluppen (Klemmvorrichtungen) .

Das Kluppenteil 6 umfasst dabei einen Kluppenmechanismus 25 mit einer Kluppenhalterung 25a, die im gezeigten Ausführungsbeispiel über die erwähnte Brücke 8 mit dem Transportteil 7 fest verbunden ist und die letztlich den gesamten Kluppenmechanismus trägt.

Der Kluppenmechanismus 25 weist eine Kluppenachse 25b auf, an der der eigentliche Kluppenhebel 25c um eine Kluppenachse 25b verschwenkbar gehalten ist. Die Kluppenachse 25b ist üblicherweise parallel zur Materialbahnebene E verlaufend ausgerichtet und damit üblicherweise mehr oder weniger parallel zu der die gesamte Transportteil mit dem Kluppenteil tragenden Führungsschiene.

Zudem ist bei dem Kluppenmechanismus ein Öffner- oder Schließteil 25g am freien Ende des Kluppenhebels 25c vorgesehen. Hier kann eine mechanische und/oder magnetische Einrichtung zum Öffnen und Schließen des Kluppenhebels angreifen, wie dies grundsätzlich in der EP 0 782 499 B1 beschrieben ist, auf die Bezug genommen wird.

Schließlich ist der Kluppenhebel 25c mittels einer Federeinrichtung 25h auf Zug kraftbeaufschlagt, wozu die Federeinrichtung 25h zum einen an einer Verankerungsstelle 25i an der Kluppenhalterung 25a und gegenüberliegend am Kluppenhebel an einer dort vorgesehenen Befestigungsstelle 25j verankert und/oder eingehängt ist. Dieser Verankerungsstelle 25j liegt zwischen der Schwenkachse 25b und dem freien Kluppenhebelende.

Im gezeigten Ausführungsbeispiel ist der Kluppenhebel 25c als Kniehebelmechanismus 60 mit einem Kniehebel 60' ausgebildet, der somit neben der Verschwenkachse 25b noch eine dazu versetzt liegende parallele Kniehebelachse 60b aufweist.

Dadurch werden zwei Kniehebel-Schenkel gebildet, nämlich ein erster Kniehebel-Schenkel KH-S1, in dessen Längserstreckungsbereich sich die Schwenkachse 25b befindet, und ein zweiter Kniehebel-Schenkel KH-S2, der um die Kniehebelachse 60b relativ zu den ersten Kniehebel-Schenkel KH-S1 schwenkbar ist.

An dem freien Ende des zweiten Kniehebel-Schenkels KH-S2 befindet sich eine Kniehebelklappe 60c, an deren Unterseite eine Greiffläche 60d zur Fixierung einer Materialbahn oder eines Films F ausgebildet ist.

Unterhalb der Greiffläche 60d der Kniehebelklappe 60c befindet sich der Kluppentisch 61, der ebenfalls eine Greiffläche 61d mit einer Kluppentisch-Oberfläche 61S umfasst. Hierdurch wird die Einspannebene E definiert, auf der eine Materialbahn oder ein Kunststofffilm F, d.h. dessen Rand eingespannt gehalten werden kann.

Der Kluppentisch 61 selbst kann mittels einer Kluppentischhalterung 61e unter Verwendung einer Verschraubung 61g an der Kluppenhalterung 25a verankert und montiert werden.

Schließlich ist auch noch ein an der Kluppenhalterung 25a montiertes oder dort ausgebildetes Ausrichtstück 63a mit einer Richtfläche 63b vorgesehen, die - worauf nachfolgend eingegangen wird - mit der Kniehebelklappe 60c wechselwirkt.

Ferner ist eine Kraftbeaufschlagungs-Einrichtung MK vorgesehen, die bevorzugt als Magnetkraft-Koppeleinrichtung ausgebildet ist. Dazu ist am unteren freien Ende des zweiten Kniehebel-Schenkels KH-S2 im gezeigten Ausführungsbeispiel unmittelbar zur Rückseite der Kniehebelklappe 60c ein Permanentmagnet 62M montiert, der dort durch geeignete Maßnahmen verankert ist. Auf der Rückseite der Kniehebelklappe 60c ist entweder ein damit auf Anziehung zusammenwirkender weiterer Magnet oder zumindest ein ferromagnetisches Material vorgesehen oder aber die Kniehebelklappe 60c besteht selbst aus einem ferromagnetischen Material, zumindest soweit, dass der erwähnte Permanentmagnet 60M Anziehungskräfte in der nachfolgend geschilderten Weise auf die Kniehebelklappe 60c ausüben kann. Die entsprechenden Verhältnisse können aber insoweit umgekehrt sein, dass auf der Rückseite der Kniehebelklappe 60c ein Permanentmagnet vorgesehen ist, der mit einem entsprechenden ferromagnetischen Teil an den zweiten Kniehebel-Schenkel KH-S2 anziehende Magnetkräfte erzeugen kann. Allgemein wird insoweit von daher nur von einer Magnetkraft-Kopplungseinrichtung MK gesprochen, die anziehende Kräfte erzeugt.

Nachfolgend wird die Funktionsweise dieses erfindungsgemäßen Ausführungsbeispieles näher erläutert, und zwar für den Fall, dass eine entsprechende Kluppeneinrichtung mit einem Transportteil 7 und dem zugehörigen Kluppenteil 6 beispielsweise dem Einlauf einer Reckanlage zugeführt wird, wobei der Kluppenhebel 25c an diesem Einlauf beispielsweise durch einen elektromagnetischen Öffner, wie er in der EP 0 782 499 B1 beschrieben ist, mittels eines magnetischen Kraftschlusses über das oben liegende Öffner- und/oder Schließerteil 25g geöffnet wird.

Das nachfolgend im Detail weiter erläuterte Prinzip ist daher sowohl für Kluppen von simultanen als auch für sequentielle Anlagen geeignet, und zwar unabhängig von der verwendeten Antriebstechnik bezüglich der Transportteile, also der Kluppen-Transporteinheiten T.

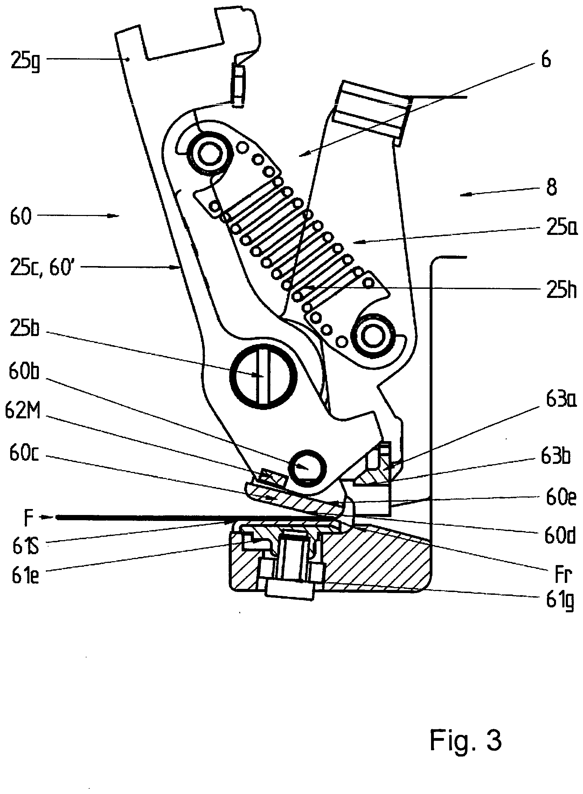

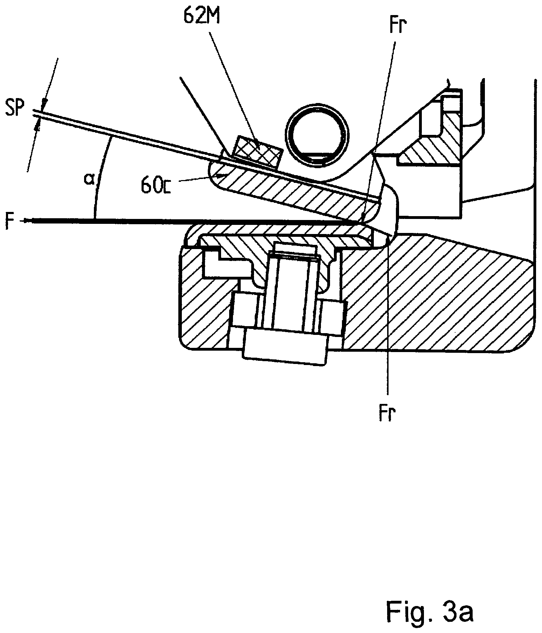

Am Beispiel einer Linearmotor getrieben Kluppe der Figur 3 soll das Prinzip der Erfindung erläutert werden. Der Kluppenhebel 25c wird am Einlauf durch einen elektromagnetischen Öffner, wie in DE 195 19 095 beschreiben, mittels eines magnetischen Kraftschlusses über das Öffner oder Schließteil 25g geöffnet.

Damit der Film störungsfrei in die Kluppe 9 eingefädelt werden kann, muss die Kniehebelklappe 60c in eine definierte Position gefahren werden. Der Kniehebel wird dazu in seine Anschlagposition gefahren. Durch die Position der Kniehebelklappe 60c wird dabei sichergestellt, dass deren Anschlagfläche 60e gegen die Richtfläche 63b des Ausrichtstückes 63a ausgerichtet wird. Die Greiffläche 60d der Kniehebelklappe ist parallel zur Greiffläche 61d der Kluppentischbeschichtung 61S. Der Abstand der beiden Flächen ist je nach Dicke des zu reckenden Vorfilms (oder allgemein einer einzuklemmenden Materialbahn F) ausgelegt und kann z.B. mehrere mm betragen. Zugleich wird die Kniehebelklappe 60c in den Wirkbereich des Permanentmagneten 62M gebracht und davon angezogen. Die Lagerung im Bolze 60b ist sehr leichtgängig ausgelegt, um eine freie Bewegung der Kniehebelklappe zu gewährleisten.

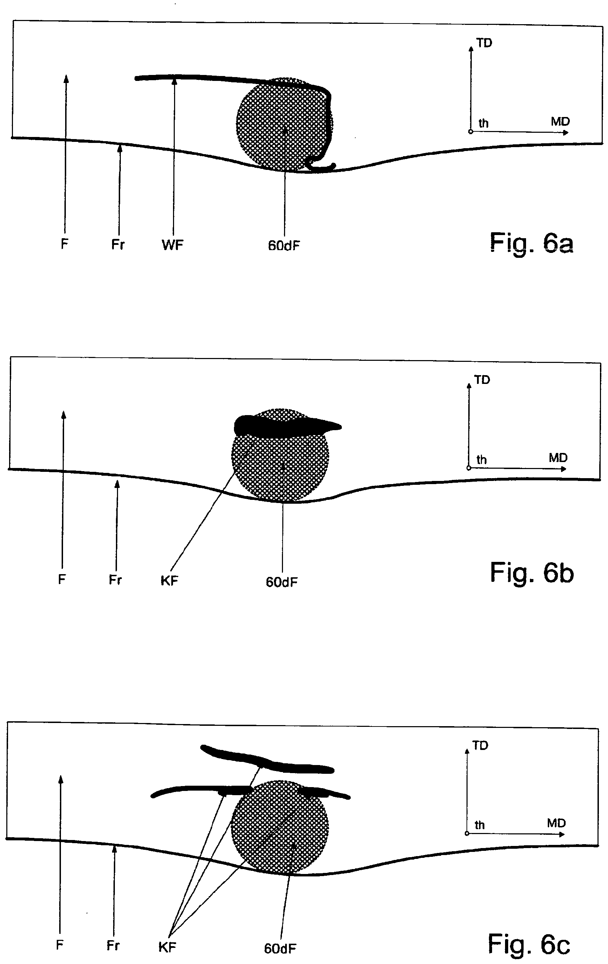

In den Figuren 3 und 3a ist der Film zwischen den Greifflächen eingefädelt und der Kluppenhebel 25 c wird magnetisch geschlossen. Erfindungsgemäß wird nun durch den Magneten 62M sichergestellt, dass die Kniehebelklappe 60c mit ihrer Hinterseite zuerst am Randbereich Fr des Filmes F aufsetzt. Die Aufsetzposition des Kluppenhebels setzt immer an der gleichen relativen Position des Filmes an. Das Aufsetzen auf der Hinterseite führt zu geringeren Reibkräften beim Schließen der Messerklappe. Dadurch wird die Gefahr des Herausschiebens des Films beim Einkluppen reduziert. Da außerdem bei hohen Geschwindigkeiten der Film eingekluppt wird bzw. die Kluppe sehr schnell geschlossen wird, kann es bei einer nicht definierten festgelegten Position zu Resonanzerscheinungen der Kniehebelklappe kommen. Durch die Schwingung wird das Dickenprofil des weichen Films ungleichmäßig beeinflusst. Es kommt zu unkontrollierbaren Dickenschwankungen im Greifbereich, was zu Abrissen oder zum Herausreißen des Filmes führen kann (s. Figur 6c).

Der Stempelfuß 6a, also die Kniehebelklappe 60c wird durch den erwähnten Magneten 62M (bevorzugt in Form eines Permanentmagneten) in seiner optimalen Position beim Aufsetzen auf den Film gehalten. Nach dem Aufsetzen auf den Film wird der Stempel 60c durch die weitere Bewegung der Messerklappe 25c zum Auflegen auf den Film F gedreht. Mit zunehmendem Abstand zum Magneten 62M wird dessen Kraft geringer und es kommt zu kaum einer Beeinflussung der Haltekraft durch den Magneten.

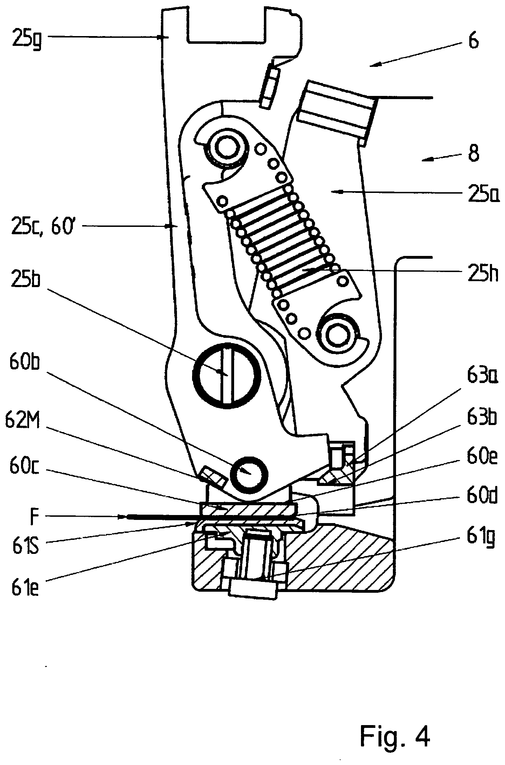

Die Schwenkbewegung in Schließstellung wird so lange durchgeführt, bis der Kluppenhebel 25c (Messerklappe 25c) in Form des Kniehebels 60' mit seinem ersten und zweiten Kniehebel-Schenkel KH-S1, KH-S2 die in Figur 4 gezeigte endgültige Schließstellung erreicht hat, in der die Greiffläche 60d der Kniehebelklappe 60c in unmittelbarer Parallellage zur Greiffläche 61d des Kluppentisches 61 liegt, darauf vorgespannt gehalten ist und dabei zwischen den beiden Greifflächen 60d und 61d die Materialbahn oder den Kunststofffolienfilm F in der Ebene E eingespannt hält, d.h. insbesondere den Rand Fr dieser Material- oder Warenbahn bzw. des Kunststofffolienfilms F.

Dazu ist es notwendig, dass ein Luftspalt SP (s. Figur 3a ca. 0.1 bis 0.5 mm) zwischen dem Magneten 62M und der Hebelklappe 60c eingehalten wird. Wäre die Haltekraft zu groß, dann führt der Löseimpuls zu einer unerwünschten Beeinflussung der Foliendicke. Als wesentlicher Vorteil gegenüber dem Stand der Technik ist auch zu erwähnen, dass das Magnetsystem völlig wartungsfrei und verschleißfrei ist.

Die Figur 4 zeigt die Situation, wenn die Kluppe vollständig geschlossen ist. Nach dem Aufsetzen auf der Hinterseite der Kluppe am Filmrand wird der Schließwinkel α (Figur 3a) kontinuierlich und schwingungsfrei und ohne Ablöseimpuls vom Magneten 62M verkleinert, bis die Schließposition erreicht wurde. Der Film läuft nun durch die Vorheizzone PH und wird danach gereckt.

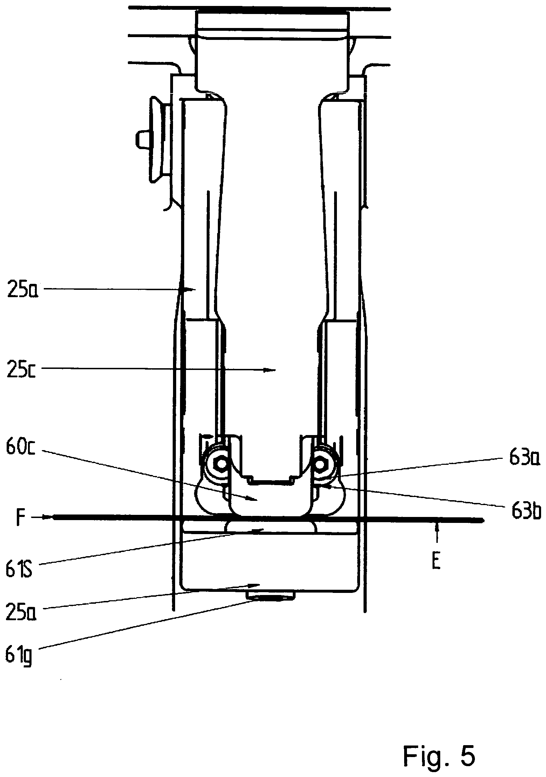

Die Figur 5 zeigt die Anordnung beim Aufsetzen des Stempelfußes aus der TD Richtung.

Mit anderen Worten wird also während des Schließvorgangs der Kluppe die Kniehebelklappe 60c - die in der Ausgangssituation im Abstand zum Kluppentisch 61 positioniert ist (und dabei bevorzugt parallel zur Ebene des Kluppentisches ausgerichtet ist) - in einem ersten Schritt so auf den Kluppentisch 61 zu bewegt, dass die Kniehebelklappe 60c auf den Kluppentisch 61 nur auf der zur Materialbahn oder zum Film F entfernt liegenden Randseite aufsetzt. Beim Schließen des Kluppenhebels 25c wird dann der Kluppenhebel so weiter verstellt, dass dabei die Kniehebelklappe 60c eine Verschwenkbewegung mit kleiner werdendem Winkel α durchführt, bis sie vollflächig auf dem Film aufliegt und der Kluppentisch dabei parallel dazu ausgerichtet wird, wobei nunmehr die Materialbahn oder der Kunststofffilm F zwischen den beiden Greifflächen 60d und 61d vollflächig eingeklemmt gehalten wird.

Anstelle des erläuterten Magneten 62M kann auch ein Polschuh verwendet werden, der wie der Magnet 62M am Kluppenhebel 25c an entsprechend geeigneter Stelle, insbesondere am Kniehebel-Schenkel KH-S2 oder auch an der Kniehebelklappe 60c montiert ist und dann mit einem entsprechenden jeweils am anderen Teil montierten ferromagnetischen Material oder dortigen Magnet- oder Polschuh zusammenwirkt, so wie dies vorstehend erläutert wurde.

In umfangreichen Versuchen wurde die Wirksamkeit der erfinderischen Maßnahme nachgewiesen. In der Figur 6a ist sehr schematisch ein Folienstück F mit dem Filmrand Fr dargestellt. Die Greiffläche 60dF auf dem Film soll in etwa den Greifflächen 60d und 61d der Kniehebelkluppe bzw. dem Kluppentisch entsprechen. Bei einer Hebelanordnung nach dem Stand der Technik kommt es zu einer sehr starken Verdünnung des Films unter den Greifflächen, und das Material unter der Fläche 60dF wird durch die Reckkraft herausgerissen. Diese extremen Dünnstellen wurden mit KF bezeichnet und befanden sich bei der Einleitung der Reckkräfte unter den Greifflächen 60d, 61d. Insbesondere diese Dünnstellen und die Verdünnung des Materials der eingeklemmten Materialbahn und insbesondere des Kunststofffilms unterhalb der Greiffläche 60dF führen dazu, dass keine Reckkräfte mehr ausgeübt werden können. Der Film wird komplett aus der Kluppe gerissen, oder er reißt an dieser Position.

Eine ähnliche Situation liegt in Figur 6b vor, allerdings befindet sich die extreme Dünnstelle KF noch innerhalb des Greifbereiches. Diese Verbesserung wurde bereits durch eine verbesserte Aufsetzposition allerdings ohne die kontinuierliche Verringerung des Aufsetzwinkels α unter dem Magneteinfluss erreicht.

Die stark verbesserte Situation gemäß Figur 6c wird durch die erfinderische Lösung erreicht. Die Greiffläche 60dF hat nun eine gleichmäßige Dicke. Das Material wird nicht unter der Kluppe 6 herausgezogen. Die angegebene Form WF ist in diesem Fall keine Dünnstelle KF, sondern ein Materialwulst WF, der durch die Verstreckung in TD- und MD-Richtung erzeugt wird.

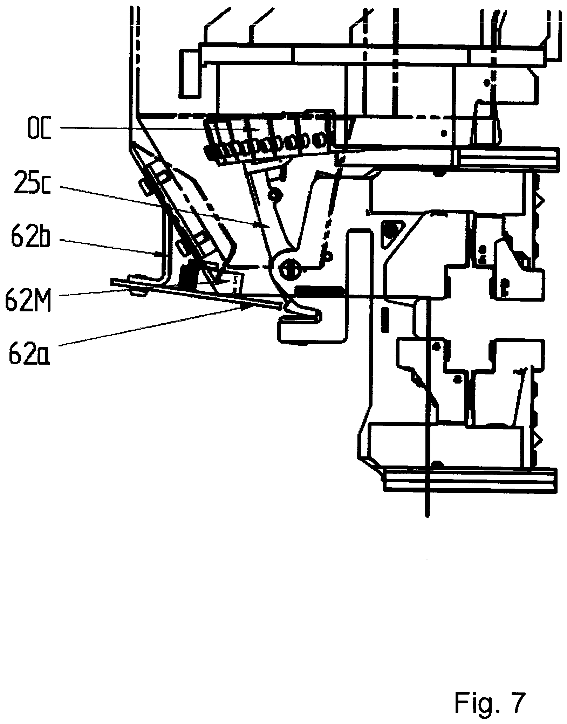

Nachfolgend wird auf ein abgewandeltes Ausführungsbeispiel anhand von Figur 7 Bezug genommen.

Das Ausführungsbeispiel gemäß Figur 7 unterscheidet sich bezüglich des funktionellen Aufbaus der Magnet-Koppel-Einrichtung MK. Im Gegensatz zu dem vorausgegangenen Ausführungsbeispiel ist bei der Variante gemäß Figur 7 vorgesehen, dass der in dem vorausgegangenen Ausführungsbeispiel beschriebene und gezeigte Magnet oder Permanentmagnet 62M nicht direkt oberhalb der Kniehebelklappe 60c im zweiten Kniehebel-Schenkel KH-S2 vorgesehen und oder montiert ist, sondern in Form eines Polschuhes 62a.

Gemäß dem Ausführungsbeispiel nach Figur 7 ist eine Anordnung mit einem Polschuh 62a gezeigt, der ortsfest an der Schließerkonstruktion OC der Kluppe montiert ist.

Der Polschuh ist vom Prinzip her ein viereckiges Blech, auf dessen Oberseite mehrere viereckige Magnete 62M angebracht sind. Dabei können die entsprechenden Magneten in ausreichender Anzahl und/oder Größe vorgesehen sein. Die Polarität der Magnetanordnung richtet sich nach der Polarität der Schließer-/Öffneranordnung OC. Im Normalfall ist der Xpol zum Polschuhblech gerichtet. Der Abstand SP zwischen der Polschuhkante und der Kniehebelklappe 60c beträgt 1-6 mm. Die Polschuhkante folgt von der Richtung her der Schließerkontur OC.

Durch die Polschuhkonstruktion werden geschlossene Magnetfeldlinien erzeugt, die über die Austrittsfläche der Polschuhkante und die Stirnseite 60'c durch die Kniehebelklappe 60c hindurch verlaufen und somit die Kniehebelklappe 60c von der Funktionsweise entsprechend ausgerichtet halten, wie dies anhand des vorausgegangenen Ausführungsbeispieles erläutert wurde.

Der Polschuh 62a und die Magneten 62M sind mit einer Halterung 62b an der Öffnerkonstruktion OC befestigt. Der Öffnermechanismus OC betätigt den Kluppenhebel 25c, also nach einer Konstruktion, wie sie grundsätzlich für die Betätigung eines Kluppenhebels zum Öffnen und Schließen aus der EP 0 782 499 B1 bekannt ist.

Abweichend zum Polschuh selbst kann aber auch ein normaler Magnet an entsprechender Stelle vorgesehen sein, dessen Südpol oder Nordpol oder einer sonstigen Angriffsfläche unter Erzeugung entsprechender Anziehkräfte auf die Stirnseite der Kniehebelklappe 60c ausgerichtet ist. Auch hier sollte bevorzugt ein geringer Spalt oder Abstand SP zwischen den Begrenzungsflächen des Polschuhs und den Begrenzungsflächen eines eventuell vorgesehenen Magneten und der Kniehebelklappe 60c bzw. der Stirnseite 60'c der Kniehebelklappe 60c vorhanden sein, um einen ähnlichen Kraftverlauf beim Schließvorgang zu ermöglichen, wie dies anhand des vorausgegangenen Ausführungsbeispieles erläutert wurde.

Grundsätzlich sind die Greifflächen 60c bzw. 61S bezüglich Form, Gestaltung einschließlich Oberflächengestaltung, Größe etc. in weiten Bereichen beliebig gewählt werden. Mit anderen Worten können die entsprechenden Greifflächen 60c und 61S bevorzugt rund, eckig, oval sein oder jede andere Form aufweisen. Bevorzugt werden abgerundete Kanten für die Greifflächen verwendet, wobei Rundungen übergangslos ausgeführt sein sollten, beispielsweise mit Radien von 0,5 bis 5,0 mm, bevorzugt mit einem Radiums r = 1,5 mm.

Als Material für die Greifflächen 60c und/oder 61S wird bevorzugt aufvulkanisiertes EPDM verwendet. Es kann aber jedes andere hochtemperaturfeste und abriebfeste Material wie beispielsweise Viton, PU, Bronze, Messing o.ä. zum Einsatz kommen. Das Material kann sowohl auf die Kniehebelklappe 60c und/oder den Kluppentisch 61e aufgebracht werden. Die Verbindung erfolgt bevorzugt durch Vulkanisierung, aber auch Verschraubung, Verklebung, Vernietung usw. ist möglich.

Für die Ausbildung der Druckfläche kann daher ganz allgemein jeder Werkstoff verwendet werden, welcher eine Härte von höchstens der Härte der thermoplastischen Kunstharzfolie besitzt, welche gereckt werden soll. Die Oberfläche- und Struktur (z.B. Ra, Rz) hängt von der Materialpaarung ab.

Bei der erfindungsgemäßen Lösung nach den Figuren 2b bis 6 wird bevorzugt ein runder Magnet D7x3 (Neodym) eingeklebt. Die Polung hängt von der Polung des Öffner-Schließers OC ab. Im Normalfall befindet sich der N Pol nach außen in Richtung der Kniehebelklappe.

## Patentansprüche

1. Kluppe mit Kniehebel-Anordnung für eine Transportanlage, insbesondere eine Reckanlage, nämlich zur Fixierung eines Materialbahnrandes (Fr) einer Materialbahn (F), mit folgenden Merkmalen:
- die Kluppe (6) umfasst einen Kluppenhebel (25c), der um eine Kluppenachse (25b) gegenüber einer Kluppenhalterung (25a) verschwenkbar ist,
- der Kluppenhebel (25c) ist als Kniehebel (60') ausgebildet und umfasst dazu einen ersten und einen zweiten Kniehebel-Schenkel (KH-S1, KH-S2), die relativ zueinander um eine Kniehebelachse (60b) verschwenkbar sind,
- der erste Kniehebel-Schenkel (KH-S1) ist um die Kluppenachse (25) verschwenkbar,
- der zweite Kniehebel-Schenkel (KH-S2) weist an seinem freien Ende eine Kniehebelklappe (60c) auf,
- an der Kluppenhalterung (25a) ist ferner ein Kluppentisch (61) mit einer Kluppentischoberfläche (61S) und einer dort ausgebildeten Greiffläche (61d) vorgesehen, und
- der Kluppenhebel (25c) ist mit seinen beiden Kniehebel-Schenkeln (KH-S1, KH-S2) zwischen einer Öffnungsstellung und einer Schließ- und Klemmstellung derart verschwenkbar, dass die Greiffläche (60d) an der Kniehebelklappe (60c) in der Öffnungsstellung von der Greiffläche (61d) des Kluppentisches (61) entfernt und in Schließstellung in Anlage aneinander unter Fixierung eines dazwischen befindlichen Randes einer Materialbahn (F) vorgespannt gehalten ist,
**gekennzeichnet durch** folgende weitere Merkmale:
- es ist ferner eine Kraftbeaufschlagungs-Einrichtung (MK)vorgesehen, die auf den zweiten um die Kniehebelachse (60b) verschwenkbaren Kniehebel-Schenkel (KH-S2) und/oder auf die Kniehebelklappe (60c) einwirkt,
- die Kraftbeaufschlagungs-Einrichtung (MK) ist dabei so ausgebildet, dass beim Verschwenken des Kluppenhebels (25c) von seiner Freigabe- in seine Schließ- und Klemmposition die Kniehebelklappe (60c) zunächst auf der zur Materialbahn (F) entfernt liegenden Seite des Kluppentisches (61) unter Vorfixierung der Materialbahn (F) in diesem Bereich aufsetzt, bevor die Kniehebelklappe (60c) während des weiteren Verschwenkvorganges ihre endgültige Schließ- und Klemmposition erreicht, in der sie kraftbeaufschlagt in Richtung Kluppentisch (61) den Materialbahnrand (Fr) zwischen den Greifflächen (60d, 61d) eingespannt hält.

2. Kluppe nach Anspruch 1, **dadurch gekennzeichnet, dass** die Kraftbeaufschlagungseinrichtung (MK) aus einer Magnet-Koppel-Einrichtung besteht oder diese umfasst.

3. Kluppe nach Anspruch 2, **dadurch gekennzeichnet, dass** die Magnet-Koppel-Einrichtung einen Magneten (62M) oder einen Polschuh (62a) umfasst, der mit einem weiteren Magneten oder einem weiteren Polschuh oder mit ferromagnetischen Materialien wechselwirkt.

4. Kluppe nach Anspruch 3, **dadurch gekennzeichnet, dass** der Magnet (62M) oder ein Polschuh an dem um die Kniehebelachse (60b) verschwenkbaren zweiten Kniehebel-Schenkel (KH-S2) oder an der Kniehebelklappe (60c) befestigt ist.

5. Kluppe nach Anspruch 4, **dadurch gekennzeichnet, dass** der Magnet (62M) oder der Polschuh im Bereich der Rückseite der Kniehebelklappe (60c) am zweiten Kniehebel-Schenkel (KH-S2) vorgesehen ist.

6. Kluppe nach einem der Ansprüche 1 bis 3, **dadurch gekennzeichnet, dass** die Magnete oder der Polschuh (62a) an einer separaten, relativ zu der verfahrbaren Kluppe feststehenden Halteeinrichtung (62b) montiert sind bzw. ist, und dass dabei die Angriffsfläche der Magneten oder des Polschuhs (62a) einer Linie oder Kurve im Raum entsprechend der Schließbewegung der Kniehebelklappe (60c) folgt.

7. Kluppe nach einem der Ansprüche 1 bis 6, **dadurch gekennzeichnet, dass** der Magnet (62M) oder der Polschuh (62a) mit seinen Angriffsflächen so angeordnet ist, dass in der maximale Anzugskräfte erzeugenden nächsten Relativlage zwischen der Kniehebelklappe (60c) oder einem damit verbundenen Angriffsteil und dem Magneten (62M) oder dem Polschuh (62a) ein minimaler Spalt (SP) ausgebildet ist.

8. Kluppe nach einem der Ansprüche 1 bis 7, **dadurch gekennzeichnet, dass** die Kniehebelklappe (60c) in Öffnungsstellung des Kluppenhebels (25c) in einer definierten Lage gehalten ist, indem die Kniehebelklappe (60c) vorzugsweise auf der der Materialbahn (F) abgewandt liegenden Seite an einem Anschlag- und/oder Ausrichtstück (63a) anschlägt und vorzugsweise auf der der Materialbahn (F) zugewandt liegenden Seite über die Kraftbeaufschlagungseinrichtung (MK) vom Kluppentisch (61) weg kraftbeaufschlagt ist.

## Claims

1. Gripper comprising a toggle lever arrangement for a transport system, in particular a stretching system, namely for fixing a material web edge (Fr) of a material web (F) comprising the following features
- the gripper (6) comprises a gripper lever (25c) which is pivotable about a gripper axle (25b) with respect to a gripper mounting (25a),
- the gripper lever (25c) is formed as a toggle lever (60') and comprises for this purpose a first and a second toggle lever arm (KH-S1, KH-S2) which are pivotable about a toggle lever axle (60b) relative to one another,
- the first toggle lever arm (KH-S1) is pivotable about the gripper axle (25),
- the second toggle lever arm (KH-S2) comprises a toggle lever gripper (60c) on the free end thereof,
- a gripper base (61) comprising a gripper base surface (61S) and a gripping face (61d) formed thereon is provided on the gripper mounting (25a), and
- the two toggle lever arms (KH-S1, KH-S2) of the gripper lever (25c) are pivotable between an open position and a closed, clamping position in such a way that the gripping face (60d) on the toggle lever flap (60c) and the gripping face (61d) of the gripper base (61) are held so as to be remote from another in the open position and are held so as to be biased in contact with one another so as to fix an edge located in between of a material web (F) in the closed position,
**characterised by** the following further features
- a force application apparatus (MK) is further provided, and acts on the second toggle lever arm (KH-S2) pivotable about the toggle lever axle (60b) and/or on the toggle lever flap (60c),
- the force application apparatus (MK) is formed in such a way that when the gripper lever (25c) pivots from the release position thereof into the closed, clamping position thereof the toggle lever flap (60c) is initially placed on the side of the gripper base (61) remote from the material web (F) so as to pre-fix the material web (F) in this region, before the toggle lever flap (60c), during the further pivot process, reaches the final closed, clamping position thereof in which it holds the material web edge (Fr) clamped between the gripping faces (60d, 61d) under application of force towards the gripper base (61).

2. Gripper according to claim 1, **characterised in that** the force application apparatus (MK) consists of or comprises a magnetic linkage apparatus.

3. Gripper according to claim 2, **characterised in that** the magnetic linkage apparatus comprises a magnet (62M) or a pole shoe (62a) which interacts with a further magnet or a further pole shoe or with ferromagnetic materials.

4. Gripper according to claim 3, **characterised in that** the magnet (62M) or a pole shoe is fixed to the second toggle lever arm (KH-S2) pivotable about the toggle lever axle (60b) or to the toggle lever flap (60c).

5. Gripper according to claim 4, **characterised in that** the magnet (62M) or the pole shoe is provided on the second toggle lever arm (KH-S2) in the region of the rear face of the toggle lever flap (60c).

6. Gripper according to any of claims 1 to 3, **characterised in that** the magnets or the pole shoe (62a) are mounted on a separate holding device (62b) which is stationary relative to the displaceable gripper, and **in that** the action face of the magnets or of the pole shoe (62a) follows a line or curve in space corresponding to the closing movement of the toggle lever flap (60c).

7. Gripper according to any of claims 1 to 6, **characterised in that** the action faces of the magnet (62M) or of the pole shoe (62) are arranged in such a way that a minimum gap (SP) is formed in the closest relative position, which generates maximum attraction forces, between the toggle lever flap (60c) or an action part connected thereto and the magnet (62M) or the pole shoe (62a)

8. Gripper according to any of claims 1 to 7, **characterised in that** the toggle lever flap (60c) is held in a defined position in the open position of the gripper lever (25c) **in that** the toggle lever flap (60c) preferably strikes a stop and/or orientation piece (63a) on the face remote from the material web (F) and preferably has a force applied away from the gripper base (61) by way of the force application apparatus (MK) on the side facing the material web (F).

## Revendications

1. Pince avec agencement de levier à genouillère pour une installation de transport, en particulier une installation d'étirage, à savoir pour la fixation de la bordure d'une nappe de matériau (Fr) d'une nappe de matériau (F), comportant les éléments techniques suivants :
- la pince (6) inclut un levier de pince (25c) qui est capable de pivoter autour d'un axe de pince (25b) par rapport à un support de pince (25a),
- le levier de pince (25c) est réalisé sous forme de levier à genouillère (60') et inclut à cet effet une première branche et une seconde branche de levier à genouillère (KH-S1, KH-S2), qui sont capables de pivoter l'une par rapport à l'autre autour d'un axe de levier à genouillère (60b),
- la première branche de levier à genouillère (KH-S1) est capable de pivoter autour de l'axe de pince (25),
- la seconde branche de levier à genouillère (KH-S2) comporte à son extrémité libre un clapet de levier à genouillère (60c),
- au niveau du support de pince (25a) il est en outre prévu une table de pince (61) avec une surface de table de pince (61S) et une surface de préhension (61d) réalisée à cet endroit, et
- le levier de pince (25c) est capable de pivoter avec ses deux branches de levier à genouillère (KH-S1, KH-S2) entre une position ouverte et une position fermée de serrage de telle façon que, dans la position ouverte, la surface de préhension (60d) sur le clapet de levier à genouillère (60c) est éloignée de la surface de préhension (61d) de la table de pince (61) et que, dans la position fermée, celles-ci viennent en contact l'une contre l'autre en fixant sous précontrainte une bordure d'une nappe de matériau (F) qui se trouve entre celles-ci,
**caractérisé par** les autres caractéristiques suivantes :
- il est en outre prévu un système d'application de force (MK), qui agit sur la seconde branche de levier à genouillère (KH-S2) capable de pivoter autour de l'axe de levier à genouillère (60b) et/ou sur le clapet de levier à genouillère (60c),
- le système d'application de force (MK) est ici réalisé de telle façon que lors du pivotement du levier de pince (25c) depuis sa position de libération jusque dans sa position de fermeture et de serrage, le clapet de levier à genouillère (60c) vient se poser tout d'abord sur le côté de la table de pince (61) situé éloigné de la nappe de matériau (F) en assurant une préfixation de la nappe de matériau (F) dans cette région, avant que le clapet de levier à genouillère (60c) atteigne, pendant la poursuite du processus de pivotement, sa position définitive de fermeture et de serrage, dans laquelle, sollicité en force en direction de la table de pince (61), il vient serrer la bordure de la nappe de matériau (Fr) entre les surfaces de préhension (60d, 61d).

2. Pince selon la revendication 1, **caractérisé en ce que** le système d'application de force (MK) est constitué par un système d'accouplement magnétique ou inclut celui-ci.

3. Pince selon la revendication 2, **caractérisé en ce que** le système d'accouplement magnétique inclut un aimant (62M) ou une pièce polaire (62a), qui coopère avec un autre aimant ou une autre pièce polaire ou encore avec des matériaux ferromagnétiques.

4. Pince selon la revendication 3, **caractérisé en ce que** l'aimant (62M) ou une pièce polaire est fixé soit sur la seconde branche de levier à genouillère (KH-S2) capable de pivoter autour de l'axe de levier à genouillère (60b), soit sur le clapet de levier à genouillère (60c).

5. Pince selon la revendication 4, **caractérisé en ce que** l'aimant (62M) ou la pièce polaire est prévu(e) dans la région de la face postérieure du clapet de levier à genouillère (60c) sur la seconde branche de levier à genouillère (KH-S2).

6. Pince selon l'une des revendications 1 à 3, **caractérisé en ce que** les aimants ou la pièce polaire (62a) sont/est monté(e)(s) sur un moyen de maintien (62b) séparé, stationnaire par rapport à la pince déplaçable, et **en ce qu'**ici la surface d'attaque des aimants ou de la pièce polaire (62a) suit une ligne ou une courbe dans l'espace en correspondance du mouvement de fermeture du clapet de levier à genouillère (60c).

7. Pince selon l'une des revendications 1 à 6, **caractérisé en ce que** l'aimant (62M) ou la pièce polaire (62a) est agencé(e) avec ses surfaces d'attaque de telle façon que dans la position relative suivante qui engendre la force d'attraction maximale entre le clapet de levier à genouillère (60c) ou une partie d'attaque reliée à celui-ci et l'aimant (62M) ou la pièce polaire (62a) il se forme un intervalle minimal (SP).

8. Pince selon l'une des revendications 1 à 7, **caractérisé en ce que**, dans la position ouverte du levier de pince (25c), le clapet de levier à genouillère (60c) est retenu dans une position définie dans laquelle le clapet de levier à genouillère (60c) vient buter, de préférence sur le côté situé détourné de la nappe de matériau (F), sur une pièce de butée et/ou une pièce d'orientation (63a) et de préférence le clapet de levier à genouillère est sollicité en force, sur le côté tourné vers la nappe de matériau (F), en éloignement de la table de pince (61) au moyen du système d'application de force (MK).
